# EUROPEAN PATENT APPLICATION

(11) **EP 2 631 108 A1**
(43) Date of publication of application: **28.08.2013**
(21) Application number: 12156710.1
(22) Date of filing: 23.02.2012
(51) Int. Cl.: B60N 2/02, H01H 25/00

(54) **Control device for seat adjustment**

(71) Applicant: Delphi Technologies, Inc., Troy, MI 48007 (US)
(72) Inventor: Reischl, Erik, 55765 Birkenfeld (DE); Lipka, Janusz, 02-066 Warsaw (PL); Szostek, Grzegorz, 32-084 Morawica (PL); Melfried, Sebastian, 30-838 Krakow (PL)
(74) Representative: Robert, Vincent

(57) **Abstract**

Control device (10) comprising:
- a carrier (12),
- a control knob (18) which is movably mounted onto the carrier (12),
- actuating levers (26) to be controlled by the displacement of the control knob (18) relative to said carrier (12) in order to cause switching contacts (34) to be actuated,
said control knob (18) being displaceable along a first transverse direction (T1) towards an actuated position, and said control knob (18) being able to be turned on a main axis (X1) towards a first pivoted position,
characterized in that the control knob (18) is connected to an actuating arm (36) which pivots, relative to the carrier (12), only when the control knob (18) is turned on the main axis (X1) towards its pivoted position, said actuating arm (36), when pivoted, causing additional switching contacts (43) to be actuated.

## Description

### TECHNICAL FIELD

The present invention relates generally to control devices comprising electrical switches and more particularly to control devices for seat adjustment.

### BACKGROUND OF THE INVENTION

A control device for seat adjustment generally comprising a control knob forming an electrical momentary-contact switch with an actuating element that is arranged in a housing so that it can be turned and displaced crosswise is known from the prior art, for example from document US6953900B2. Such a control device comprises actuating levers acting upon corresponding switching contacts arranged on a main printed circuit board for controlling functions assigned to contact positions of the actuating element along its transverse travel path. Additionally, said control device comprises a switching contact in the form of a contact roller which is arranged in the actuating element in order to turn the actuating element. The contact roller is supported in spring-loaded fashion in the actuating element on the side that faces the housing wall and acts upon terminal contacts of an auxiliary printed circuit board mounted in the knob for controlling functions assigned to contact positions of the actuating element around its pivot axis.

According to this arrangement, the control device needs two printed circuit boards and different switching contacts for the pivot positions and for the transverse positions. This leads the control device to have different haptic feelings depending on how the knob is actuated with regards to the housing.

It is an aim of the present invention to provide a control device wherein the haptic feeling is substantially the same whatever the actuation position of the knob is.

It is also an aim of the present invention to provide a control device as compact as possible, with a simpler and more reliable actuation mechanism.

### SUMMARY OF THE INVENTION

The present invention proposes a control device, more particularly for an automotive vehicle, comprising:
- a carrier,
- a control knob which is movably mounted onto the carrier,
- actuating levers to be controlled by the displacement of the control knob relative to said carrier in order to cause switching contacts to be actuated,
said control knob being displaceable relative to said carrier, from a rest position at least along a first transverse direction towards an actuated position, and said control knob being able to be turned on a main axis from the rest position towards at least a first pivoted position,
**characterized in that** the control knob is connected to at least one actuating arm which pivots, relative to the carrier, only when the control knob is turned on the main axis towards its pivoted position, said actuating arm, when pivoted, causing additional switching contacts to be actuated.

The control device of the invention allows for a simple and reliable structure with a compact design while still limiting the number of different components. Also, there is no requirement for additional printed circuit board to be arranged in the control knob.

The invention allows making a control device with the same haptic feeling both when the control knob is translated transversely and when the control knob is pivoted on its axis. All the switching contacts can be made the same and arranged at the same lever of the assembly, preferably using domes on a switching substrate extending above a printed circuit board. In that case, the switching function and the haptic feeling are provided by the domes and the domes bias the control knob towards its rest position.

According to other advantageous features of the invention:
- the control knob has a shaft extending towards the carrier through an oblong slot of the actuating arm, said oblong slot extending along said first transverse direction, such that the control knob is free to translate along the first transverse direction without causing corresponding transverse displacement of the actuating arm;
- the shaft is mounted into an actuating element movable relative to the carrier;
- the shaft has at least one lateral flat surface which is substantially parallel to the first transverse direction and which comes into contact with the corresponding ridge of the oblong slot when the control knob is pivoted in order to drive the actuating arm towards the pivoted position;
- said additional switching contacts are actuated by corresponding additional actuating levers, said additional actuating levers being controlled by the actuating arm;
- said control knob is displaceable from the rest position along a second transverse direction towards an actuated position, said second transverse direction being substantially orthogonal to the first transverse direction;
- the actuating arm extends substantially transversely along said second transverse direction, and in that the actuating arm comprises, on both sides of the first transverse axis, oblong holes along said second transverse direction, each additional actuating lever having an actuating post extending through an oblong hole such that transverse displacement of the actuating arm with the control knob along the second transverse direction does not cause actuation of the additional actuating levers and such that, when the control knob is pivoted on its main axis, the actuating arm is pivoted and engages said actuating posts to make them tilt and to cause actuation of the corresponding additional switching contacts;
- the switching contacts actuated by the transverse displacements of the control knob and the additional switching contacts actuated by the pivoted motion of the control knob are arranged in domes cooperating with terminal contacts;
- the domes are all arranged on the same switching substrate;
- each actuating lever cooperates with an associated actuator arranged in the carrier to acts upon the corresponding switching contact.

The present invention also proposes a vehicle having an adjustable seat, **characterized in that** it comprises a control device having any of the preceding features to control the seat adjustable positions.

Other advantages of the invention can be understood from the following description of exemplary embodiments.

### BRIEF DESCRIPTION OF THE DRAWINGS

The present invention is now described by way of example with reference to the accompanying drawings in which:
- figure 1 is an exploded perspective view showing a control device according to a first embodiment of the present invention;
- figure 2 is an upper view showing the control device of figure 1 in its rest position;
- figure 3 is a side view showing the control device of figure 1 in its rest position;
- figure 4 is a cross-section view along the plan 4-4 showing the control device of figure 1 in its rest position;
- figure 5 is a view similar to the one of figure 2 showing the control device of figure 1 in a forward actuated position;
- figure 6 is a cross-section view along the plan 6-6 showing the control device of figure 5 in the forward actuated position;
- figure 7 is a view similar to the one of figure 2 showing the control device of figure 1 in a pivoted actuated position;
- figure 8 is a cross-section view along the plan 8-8 showing the control device of figure 7 in the pivoted actuated position;
- figure 9 is a cross-section view similar to the one of figure 8 showing a control device according to a second embodiment of the present invention.

### DESCRIPTION OF THE PREFERRED EMBODIMENTS

In the following description, similar parts can have same reference numbers.

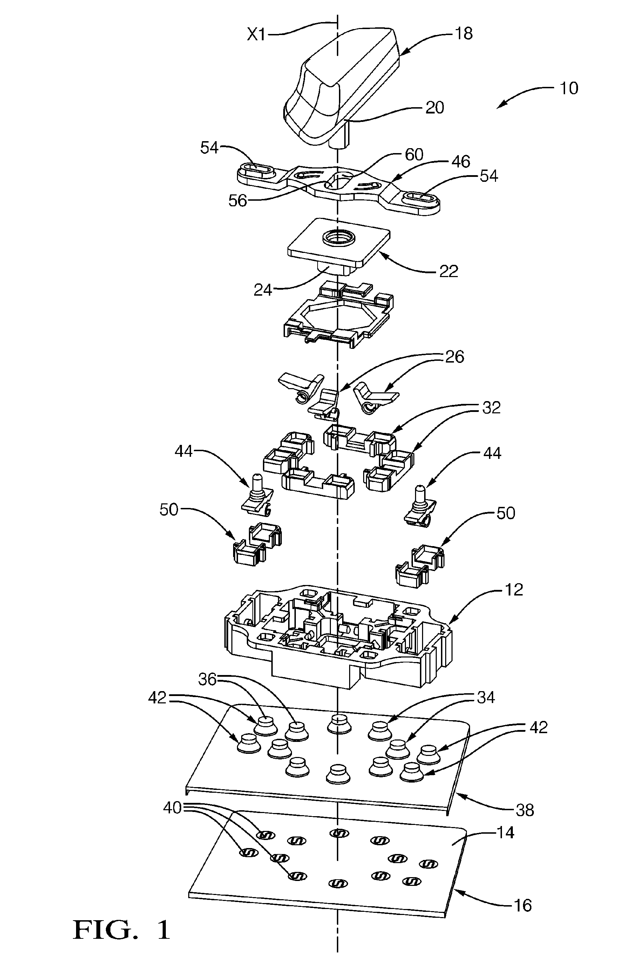

Referring to figure 1 to 8, a control device 10 according to a first embodiment of the invention is shown. The control device 10 is preferably used for controlling stepping motors for the adjustment of a motor vehicle seat (not shown), including an adjustment of the seat depth, of the seat inclination, etc. The control device 10 is a multifunction switch in the form of a momentary-contact switch.

According to the embodiment shown, the control device 10 comprises a carrier 12, or housing, which is mounted on the upper face 14 of a printed circuit board 16, and a control knob 18 which is movable relative to the carrier 12 in order to control various adjustment functions. The control device 10 can be connected to an electronic control unit (not shown) which controls the various adjustment functions depending on the various actuated positions of the control knob 18.

Of course, the control device can be at least partially arranged within a housing (not shown) such that only the control knob 18 is accessible to the user.

The control knob 18 has a shaft 20 extending towards the carrier 12 along a main pivot axis X1. The control knob 18 can be displaced transversely along first and along second transverse directions T1, T2, and it can be turned on its main pivot axis X1, as indicated by the double arrow F1.

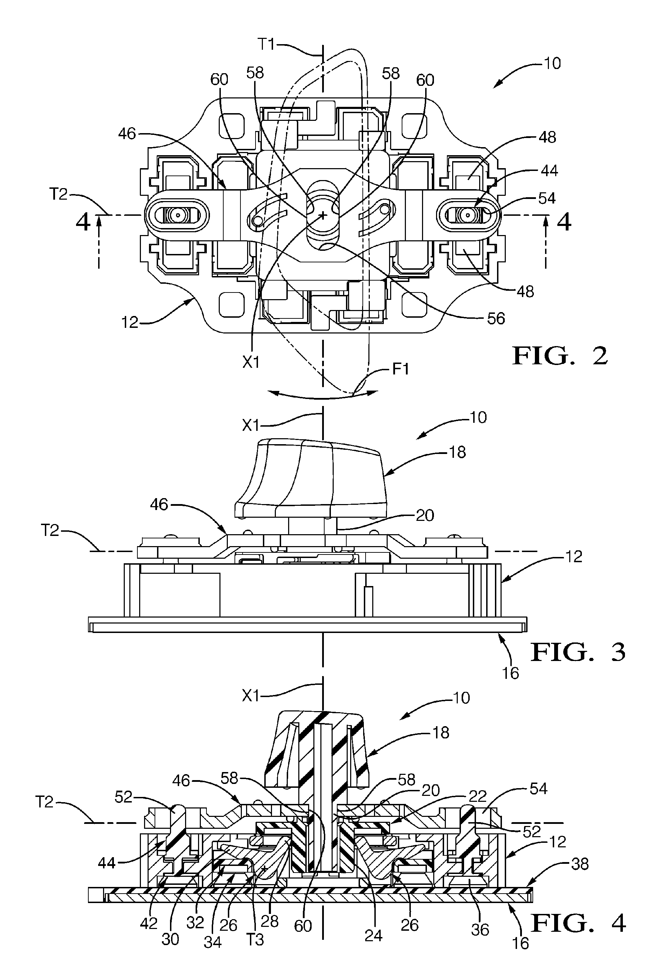

In the following description, without limiting purpose, the main pivot axis X1 will be oriented vertically, as shown on figure 1, and transverse directions will be defined relative to said main pivot axis X1. Said first transverse direction T1 is oriented forward and backward, corresponding to up and down on figure 2, and said second transverse direction T2 is oriented towards left and towards right, corresponding to left and right on figure 2.

As shown on figure 4, the control knob 18 is mounted in an actuating element 22, said shaft 20 being slidably inserted into a tubular guide projection 24 of the actuating element 22 such that transverse movements of the control knob 18 generate corresponding transverse movements of the tubular guide projection 24 within the carrier 12, and such that the control knob 18 is free to rotate with regards to the guide projection 24.

Four angular actuating levers 26 are arranged in the carrier 12 so that they can be pivoted transversely T3 relative to one another, a first and a second actuating levers 26 being arranged on each side of the tubular guide projection 24 along the first transverse direction T1, a third and a fourth actuating levers 26 being arranged on each side of the tubular guide projection 24 along the second transverse direction T2. In the rest position, or neutral position, of the control knob 18, as shown on figures 2 to 4, the four angular actuating levers 26 are tilted towards the tubular guide projection 24 and have substantially the same tilt angle with regards to their own transverse pivot axes.

Each actuating lever 26 engages the tubular guide projection 24 with a first leg 28, a second leg 30 extending above an actuator 32 which is guided in the carrier 12 to move vertically towards a pair of switching contacts 34. The switching contacts 34 are arranged in domes 36 of a switching substrate 38. The switching substrate 38 lies on the printed circuit board 16 with the terminal contacts 40 assigned to the switching contacts 34. Typically the switching substrate 38 is made of an elastomeric material.

Advantageously, additional switching contacts 42 are provided to be actuated by additional actuating levers 44 when the control knob 18 is pivoted. Said additional actuating levers 44 are controlled by an actuating arm 46 which is connected to the shaft 20 of the control knob 18 so that said actuating arm 46 pivots with the shaft 20 on the main pivot axis X1 causing the additional actuating levers 44 to swivel, either forward or backward depending on the rotational direction of the control knob 18. The actuating arm 46 extends substantially along the second transverse direction T2 on each side of the control knob 18. According to the first embodiment, the actuating arm 46 extends above the carrier 12, between the actuating element 22 and the control knob 18 handle portion.

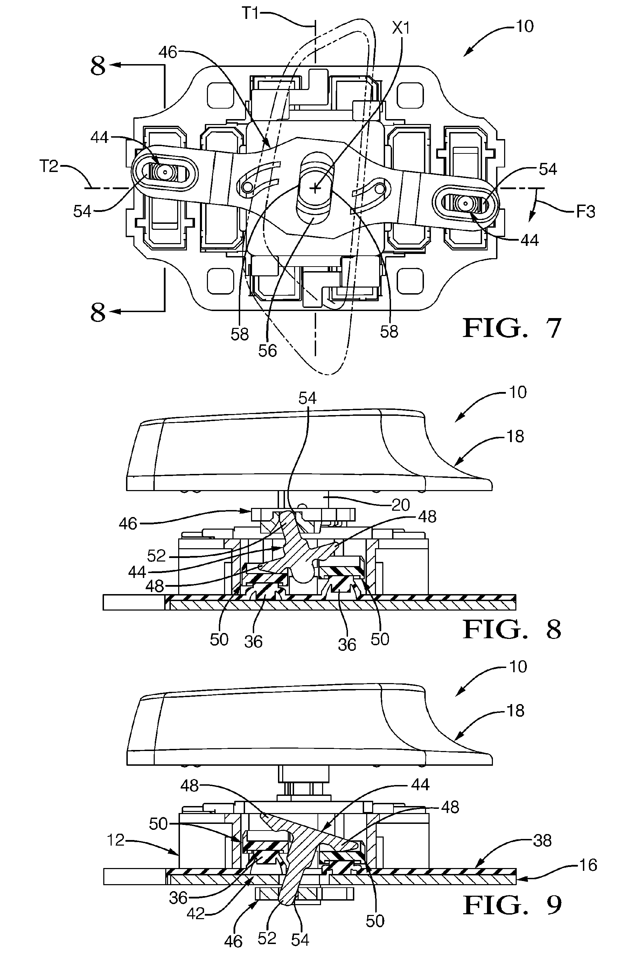

According to the embodiment shown, as shown more particularly on figures 7 and 8, each additional actuating lever 44 is a toggle lever having two transverse legs 48 extending above respective additional actuators 50 for actuating corresponding additional switching contacts 42, and one actuating post 52, or toggle lever, extending axially trough an oblong hole 54 of the actuating arm 46. The oblong hole 54 is elongated along the second transverse direction T2 so that, when the control knob 18 is moved along the second transverse direction T2, either towards left or right, the actuating arm 46 is moved simultaneously without causing the actuating posts 52 to swivel. Therefore, the length of each oblong hole 54 is at least equal to the travel length of the control knob 18 between its two opposite transverse actuated positions along the second transverse direction T2.

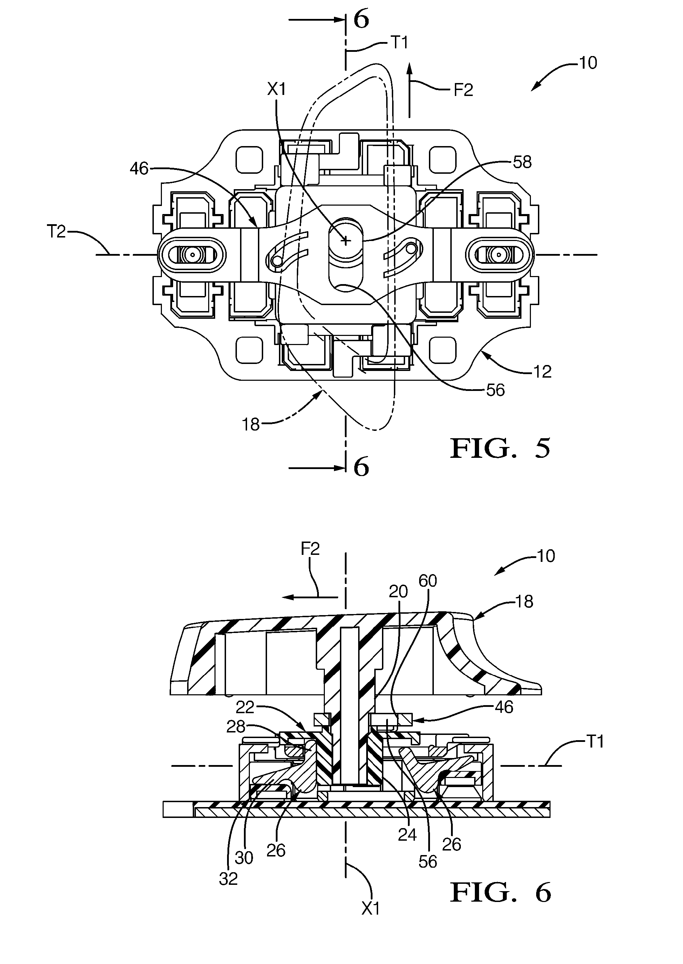

The actuating arm 46 also has a central oblong slot 56 which is elongated along the first transverse direction T1 so that, when the control knob 18 is moved along the first transverse direction T1, either forward, as shown on figure 5 and 6, or backward, the actuating arm 46 does not move with the control knob 18. Therefore, the length of the oblong slot 56 is at least equal to the travel length of the control knob 18 between its two opposite transverse actuated positions along the first transverse direction T1.

Advantageously, the shaft 20 comprises laterally flat surfaces 58 parallel to the ridges 60 of the oblong slot 56 so that, when the control knob 18 is pivoted, either clockwise or counterclockwise, the actuating arm 46 pivots with the control knob 18, the flat surfaces 58 engaging with said ridges 60 of the oblong slot 56, as shown on figure 7. In the rest position, as shown on figure 2, the flat surfaces 58 are parallel to the first transverse direction T1 so that the shaft 20 is able to translate along the first transverse direction T1 respectively towards its rear or forward positions without engaging the ridges 60 and without causing any movement of the actuating arm 46, as illustrated by figures 5 and 6. No movement of the actuating arm 46 means no actuation of the additional actuating levers 44.

When displacing the control knob 18 in the first transverse direction T1, forwardly (F2) considering figure 5 and 6, the actuating element 22 is driven by the shaft 20 forwardly from the rest position shown of figure 2 to the forward actuated position of figure 5 and 6. This forward actuation causes the corresponding actuating lever 26 to be pivoted by the tubular guide projection 24 and the corresponding actuator 32 to act upon two domes 36 until the corresponding switching contacts 34 contact the terminal contacts 40 of the printed circuit board 16. During this forward actuation, the shaft 20 slides along the oblong slot 56 and the actuating arm 46 stay in its rest position, as do the additional actuating levers 44.

After having been displaced and released, the control knob 18 is automatically returned into the rest position, or idle position, due to the resetting of the domes 36 of the switching substrate 38 which act upon the tubular guide projection 24 by means of the assigned actuating lever 26, so that the control knob 18 is moved back into the rest position.

Of course, the control knob 18 works substantially the same when it is actuated from its rest position towards its backward actuated position, opposite actuating levers and switching contacts being involved.

When displacing the control knob 18 in the second transverse direction T2, towards left or right, the actuating element 22 is driven by the shaft 20 forwardly from the rest position shown of figure 2 to a lateral actuated position (not shown). This actuation causes the corresponding actuating lever 26 to be pivoted by the tubular guide projection 24 and the corresponding actuator 32 to act upon two domes 36 until the corresponding switching contacts 34 contact the terminal contacts 40 of the printed circuit board 16. During this actuation, the actuating arm 46 moves along with the shaft 20, respectively towards left or right, the shaft 20 being in direct contact with the corresponding ridge 60 of the oblong slot 56. However, because the actuating posts 52 are received within oblong holes 54 of the actuating arm 46, the transverse displacement (T2) of the actuating arm 46 does not cause any pivoting of the additional actuating levers 44.

Similarly to the forward/backward actuation, after having been displaced and released, the control knob 18 is automatically returned into the rest position.

When turning the control knob 18 in one rotational direction, clockwise (F3) considering figure 7 and 8, the actuating arm 46 is driven by the shaft 20 from the rest position of figure 2 to the pivoted actuated position of figure 7 and 8. This rotational actuation causes the two additional actuating levers 44 to be pivoted by the actuating arm 46 through the ridges of the oblong holes 54 which engage with the actuating posts 52, the respective additional actuators 50 acting upon domes 36 until the corresponding additional switching contacts 42 contact the terminal contacts 40 of the printed circuit board 16. In the clockwise actuation shown on figure 7, the left additional actuating lever 44 actuates a front-left additional switching contact 42 while the right additional actuating lever 44 actuates a rear-right additional switching contact 42. Symmetrically, the opposite happens when the control knob 18 is turned counterclockwise.

It can be noted that the two pivoted positions of the control knob 18 generate two different combinations of actuated additional switching contacts 42 which allows for detection of the rotational direction.

During the pivoted actuation, the shaft 20 freely turns in the tubular guide projection 24 without causing any displacement of the actuating element 22 and without causing any tilting of the other actuating levers 26.

Similarly to what has been described before in connection with the transverse actuation movements, after having been pivoted and released, the control knob 18 is automatically returned into the rest position due to the resetting of the domes 36 of the switching substrate 38 which act upon the actuating arm 46 by means of the additional actuating levers 44, so that the control knob 18 is moved back into the rest position.

On figures 9, a second embodiment of the control device 10 according to the teachings of the invention has been represented. Only the differences with regards to the first embodiment will be described below.

The second embodiment differs from the first embodiment by the arrangement of the actuating arm 46 below the printed circuit board 16 and by a shape slightly different for the additional actuating levers 44. Here the actuating post 52 of each additional actuating lever 44 extends downward, considering figure 9, instead of upward. It is actuated similarly as before by the actuating arm 46. Accordingly, the printed circuit board 16 and the switching substrate 38 comprise corresponding openings for the shaft 20 and for the actuating post 52 of the additional actuating levers 44.

Of course, guiding parts or connecting parts (not shown) are provided for retaining the actuating arm 46 below the printed circuit board 16.

## Claims

1. Control device (10), more particularly for an automotive vehicle, comprising:
- a carrier (12),
- a control knob (18) which is movably mounted onto the carrier (12),
- actuating levers (26) to be controlled by the displacement of the control knob (18) relative to said carrier (12) in order to cause switching contacts (34) to be actuated,
said control knob (18) being displaceable relative to said carrier (12), from a rest position at least along a first transverse direction (T1) towards an actuated position, and said control knob (18) being able to be turned on a main axis (X1) from the rest position towards at least a first pivoted position,
**characterized in that** the control knob (18) is connected to at least one actuating arm (36) which pivots, relative to the carrier (12), only when the control knob (18) is turned on the main axis (X1) towards its pivoted position, said actuating arm (36), when pivoted, causing additional switching contacts (43) to be actuated.

2. Control device (10) according to the preceding claim, **characterized in that** the control knob (18) has a shaft (20) extending towards the carrier (12) through an oblong slot (56) of the actuating arm (46), said oblong slot (56) extending along said first transverse direction (T1), such that the control knob (18) is free to translate along the first transverse direction (T1) without causing corresponding transverse displacement of the actuating arm (46).

3. Control device (10) according to the preceding claim, **characterized in that** the shaft (20) is mounted into an actuating element (22) movable relative to the carrier (12).

4. Control device (10) according to claim 2 or 3, **characterized in that** the shaft (20) has at least one lateral flat surface (58) which is substantially parallel to the first transverse direction (T1) and which comes into contact with the corresponding ridge of the oblong slot (56) when the control knob (18) is pivoted in order to drive the actuating arm (46) towards the pivoted position.

5. Control device (10) according to any of the preceding claims, **characterized in that** said additional switching contacts (42) are actuated by corresponding additional actuating levers (44), said additional actuating levers (44) being controlled by the actuating arm (46).

6. Control device (10) according to any of the preceding claims, **characterized in that** said control knob (18) is displaceable from the rest position along a second transverse direction (T2) towards an actuated position, said second transverse direction (T2) being substantially orthogonal to the first transverse direction (T1).

7. Control device (10) according to the preceding claim taken in combination with claim 5, **characterized in that** the actuating arm (46) extends substantially transversely along said second transverse direction (T2), and **in that** the actuating arm (46) comprises, on both sides of the first transverse axis (T1), oblong holes (54) along said second transverse direction (T2), each additional actuating lever (44) having an actuating post (52) extending through an oblong hole (54) such that transverse displacement of the actuating arm (46) with the control knob (18) along the second transverse direction (T2) does not cause actuation of the additional actuating levers (44) and such that, when the control knob (18) is pivoted on its main axis (X1), the actuating arm (46) is pivoted and engages said actuating posts (52) to make them tilt and to cause actuation of the corresponding additional switching contacts (42).

8. Control device (10) according to any of the preceding claims, **characterised in that** the switching contacts (34) actuated by the transverse displacements of the control knob (18) and the additional switching contacts (42) actuated by the pivoted motion of the control knob (18) are arranged in domes (36) cooperating with terminal contacts (40).

9. Control device (10) according to the preceding claim, **characterized in that** the domes (36) are all arranged on the same switching substrate (38).

10. Control device (10) according to any of the preceding claims, **characterized in that** each actuating lever (26, 44) cooperates with an associated actuator (32, 50) arranged in the carrier (12) to acts upon the corresponding switching contact (34, 42).

11. Vehicle having an adjustable seat, **characterized in that** it comprises a control device (10) according to any of the preceding claims to control the seat adjustable positions.
